(19) Europäisches Patentamt
European Patent Office
Office européen des brevets

(11) **EP 3 076 187 B1**

(12) **FASCICULE DE BREVET EUROPEEN**

(45) Date de publication et mention
de la délivrance du brevet:
**10.03.2021   Bulletin 2021/10**

(51) Int Cl.:
***G01Q 60/30*** *(2010.01)*

(21) Numéro de dépôt: **16162521.5**

(22) Date de dépôt: **29.03.2016**

(54) **PROCEDE DE DETERMINATION DE LA DUREE DE VIE DES PORTEURS**

VERFAHREN ZUR BESTIMMUNG DER LEBENSDAUER VON TRÄGERN

METHOD FOR DETERMINING THE LIFETIME OF CARRIERS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **02.04.2015   FR 1552830**

(43) Date de publication de la demande:
**05.10.2016   Bulletin 2016/40**

(73) Titulaire: **COMMISSARIAT À L'ÉNERGIE ATOMIQUE ET AUX ÉNERGIES ALTERNATIVES**
**75015 Paris (FR)**

(72) Inventeurs:
• **BOROWIK, Lukasz**
**38360 Sassenage (FR)**
• **CHEVALIER, Nicolas**
**38690 Chabons (FR)**
• **POUCH, Sylvain**
**38000 Grenoble (FR)**

(74) Mandataire: **Cabinet Camus Lebkiri**
**25 rue de Maubeuge**
**75009 Paris (FR)**

(56) Documents cités:
• **BOROWIK L ET AL: "Measuring the lifetime of silicon nanocrystal solar cell photo-carriers by using Kelvin probe force microscopy and x-ray photoelectron spectroscopy", NANOTECHNOLOGY, IOP, BRISTOL, GB, vol. 25, no. 26, 11 juin 2014 (2014-06-11) , page 265703, XP020266871, ISSN: 0957-4484, DOI: 10.1088/0957-4484/25/26/265703 [extrait le 2014-06-11]**
• **TAKIHARA MASAKI ET AL: "Minority carrier lifetime in polycrystalline silicon solar cells studied by photoassisted Kelvin probe force microscopy", APPLIED PHYSICS LETTERS, AMERICAN INSTITUTE OF PHYSICS, 2 HUNTINGTON QUADRANGLE, MELVILLE, NY 11747, vol. 93, no. 2, 14 juillet 2008 (2008-07-14), pages 21902-21902, XP012112413, ISSN: 0003-6951, DOI: 10.1063/1.2957468**
• **DAVID C. COFFEY ET AL: "Time-resolved electrostatic force microscopy of polymer solar cells", NATURE MATERIALS, vol. 5, no. 9, 1 septembre 2006 (2006-09-01), pages 735-740, XP055244885, GB ISSN: 1476-1122, DOI: 10.1038/nmat1712**

**Description**

**DOMAINE DE L'INVENTION**

L'invention concerne un procédé de caractérisation électrique des matériaux semiconducteurs, et plus particulièrement, un procédé de détermination de la durée de vie des porteurs d'un matériau semi-conducteur.

**ETAT DE LA TECHNIQUE**

Le temps de vie porteur $\tau$ joue un rôle important dans l'efficacité globale des cellules photovoltaïque solaire, car il limite la proportion de charges photo-générées collectées au niveau des électrodes. Ainsi, il est souhaitable d'avoir des durées de vie de porteurs importantes dans les cellules solaires afin de maximiser la quantité de charges collectée au niveau des électrodes. La durée de vie des porteurs $\tau$, également appelé temps de recombinaison des porteurs ou « photo carrier lifetime », est défini comme la durée pendant laquelle un électron excité par de la lumière reste dans la bande de conduction avant de retomber dans la bande de valence. La durée de vie des porteurs ne doit pas être confondue avec le temps de génération des porteurs, appelé « carrier generation lifetime », qui est la durée nécessaire pour amener un électron dans la bande de conduction.

L'art antérieur connait de nombreuses méthodes de détermination de la durée de vie des porteurs. Ainsi, le document Coffey D, Ginger D, Time-resolved electrostatic force microscopy of polymer solar cells, 2006 Nature materials, 5, 735 propose d'illuminer avec une source lumineuse la surface de l'échantillon dont on veut déterminer la durée de vie des porteurs et de mesurer la décroissance du signal électrique obtenu une fois que l'on a éteint cette source lumineuse. Les documents Borowik et al. Nanotechnology 25, 265703 2014 et Takihara Appl. Phys. Lett. 93, 021902 2008 quant à eux proposent d'illuminer la surface de l'échantillon avec une lumière modulée puis de mesurer le potentiel de surface par une technique de microscopie de force à sonde de Kelvin. Toutefois, les techniques de l'art antérieur permettent uniquement d'obtenir des valeurs de la durée de vie des porteurs moyennées sur une surface relativement grande de l'échantillon. Ainsi, aucune des techniques de l'art antérieur ne permet de cartographier avec une bonne résolution latérale la durée de vie des porteurs. En outre, les méthodes de l'art antérieur présentent une résolution temporelle limitée.

**EXPOSE DE L'INVENTION**

L'invention vise à remédier aux inconvénients de l'état de la technique en proposant un procédé de détermination de la durée de vie des porteurs qui présente une bonne résolution spatiale et une bonne résolution temporelle.

Pour ce faire, est proposé selon un premier aspect de l'invention un procédé de détermination d'une durée de vie des porteurs en au moins un point d'une surface d'un échantillon selon la revendication 1, le procédé comportant les étapes suivantes :

- en l'absence d'illumination, mesurer, au niveau du point, un paramètre P par une technique de microscopie à force atomique de façon à obtenir une valeur $P_{dark}$ ;
- éclairer le point avec un faisceau de lumière continue ;
- mesurer, au niveau du point, le paramètre P par la technique de microscopie à force atomique de façon à obtenir une valeur $P_{sat}$ ;
- éclairer successivement le point avec des faisceaux de lumière modulée présentant chacun une fréquence $f_i$ différente, la fréquence $f_i$ variant d'un faisceau de lumière modulée au suivant, les fréquences $f_i$ étant comprises entre une fréquence minimale $f_{min}$ et une fréquence maximale $f_{max}$, les faisceaux de lumière modulée présentant un rapport cyclique D ;
- pour chaque faisceau de lumière modulée, mesurer, au niveau du point, le paramètre P par la technique de microscopie à force atomique de façon à obtenir une valeur $P_{trans}^i$ pour chaque fréquence $f_i$ ;
- calculer par une formule de quadrature une interpolation S, au niveau du point, d'une courbe représentant $P_{trans}^i$ en fonction des fréquences $f_i$;
- calculer la durée de vie des porteurs, au niveau du point, en utilisant la formule suivante :

$$\tau = \frac{\frac{x_0^2}{2} + x_0(D-1) - K}{\frac{S}{(P_{sat} - P_{dark})} - (1+D)f_{max}}$$

Dans laquelle $X_0$ et K sont des constantes.

Le procédé est particulièrement avantageux car il permet de déterminer à l'aide de calculs simples la durée de vie des porteurs au niveau d'un point précis de l'échantillon, de sorte qu'en reproduisant ce procédé en une multiplicité de points de l'échantillon on peut réaliser une cartographie de la durée de vie des porteurs à la surface d'un échantillon avec une très bonne résolution spatiale, c'est-à-dire avec une résolution spatiale inférieure à 100 nm. Le procédé peut donc être utilisé pour réaliser une cartographie de la durée de vie des porteurs sur des matériaux présentant une structure complexe et des fortes variations du de la durée de vie des porteurs. En outre, au contraire des procédés de l'art antérieur dans lesquels les étapes de calcul de la durée de vie des porteurs étaient très lourdes et donc très consommatrices en temps, le procédé selon l'invention utilise des étapes de calcul qui peuvent être effectuées très rapidement de sorte que la cartographie de la durée de vie des porteurs peut être réalisée avec une très bonne résolution temporelle.

Le procédé selon le premier aspect de l'invention peut également présenter une ou plusieurs des caractéristiques ci-après prises indépendamment ou selon toutes les combinaisons techniquement possibles.

L'interpolation S peut être calculée par plusieurs formules de quadrature.

Ainsi, selon un premier mode de réalisation, l'interpolation S est calculée par la formule de quadrature suivante :

$$S = \sum_{i=1}^{i=N} (P_{trans}^i - P_{dark})(f_i - f_{i-1})$$

Avec $f_0 = 0$, $f_1 = f_{min}$ et $f_N = f_{max}$

Cette méthode de calcul de S est appelée « méthode du rectangle à l'ordre zéro ».

Cette méthode présente l'avantage d'être simple.

Selon un deuxième mode de réalisation, l'interpolation S est calculée par la formule de quadrature suivante :

$$S = \frac{1}{2} \sum_{i=1}^{i=N} (P_{trans}^i + P_{trans}^{i-1} - 2P_{dark})(f_i - f_{i-1})$$

Avec $f_0 = 0$, $f_1 = f_{min}$ et $f_N = f_{max}$

Cette méthode de calcul de S est appelée « méthode du trapèze à l'ordre un ».

Cette méthode est la plus complexe mais également la plus précise.

Selon un troisième mode de réalisation, l'interpolation S est calculée par la formule de quadrature suivante :

$$S = (P_{trans}^N - P_{dark})\left(\frac{f_N - f_{N-1}}{2}\right) + \sum_{i=1}^{i=N-1} (P_{trans}^i - P_{dark})\left(\frac{f_{i+1} - f_{i-1}}{2}\right)$$

Avec $f_0 = 0$, $f_1 = f_{min}$ et $f_N = f_{max}$

Cette méthode de calcul est appelée « méthode du point milieu à l'ordre un ». Cette méthode présente l'avantage d'être simple.

Avantageusement, le paramètre $x_0$ a une valeur telle que $g'(x_0) = 0.95$ avec $g(x) = xe^{\frac{(D-1)}{x}}$. Avantageusement, la constante K est donnée par la formule suivante :

$$K = \sum_{0}^{n} (-1)^n \frac{1}{(n+2)!} x_0^{n+2} \times e^{\frac{(D-1)}{x_0}} \sum_{b_1 + 2b_2 + \cdots + nb_n = n} \frac{n!}{b_1! b_2! \ldots b_n!} \prod_{j=1}^{n} \left(\frac{(1+D)^j}{x_0^{j+1}}\right)^{b_j}$$

Plusieurs techniques de microscopie à force atomique peuvent être utilisées.

Ainsi, selon un premier de mode réalisation, la technique de microscopie à force atomique utilisée est une technique de microscopie à force Kelvin, le paramètre P mesuré étant une différence de potentiel de contact.

Selon un deuxième mode de réalisation, la technique de microscopie à force atomique utilisée est une technique de microscopie à force électrostatique, le paramètre P mesuré étant une fréquence.

Selon un troisième mode de réalisation, la technique de microscopie à force atomique est une technique de microscopie à force atomique conductrice, le paramètre P mesuré étant un courant.

Le rapport cyclique de chaque faisceau de lumière modulé est défini comme étant le rapport entre la durée d'illumination et la somme de la durée d'illumination et d'extinction. Avantageusement, le rapport cyclique D est supérieur au rapport cyclique minimal pour que des porteurs apparaissent dans le matériau et strictement inférieur à 1.

Selon un mode de réalisation préférentiel, chaque faisceau de lumière modulée est un faisceau monochromatique.

Avantageusement, la fréquence $f_i$ est croissante d'un faisceau de lumière modulée au suivant, et elle croit de préférence en suivant une loi logarithmique.

Un deuxième aspect de l'invention concerne un procédé de cartographie de la durée de vie des porteurs d'une surface d'un échantillon selon la revendication 12, dans lequel le procédé de détermination du de la durée de vie des porteurs selon le premier aspect de l'invention est répété en plusieurs points de l'échantillon de façon à effectuer une cartographie de la durée de vie des porteurs.

## DESCRIPTION DES FIGURES

D'autres caractéristiques et avantages de l'invention ressortiront à la lecture de la description détaillée qui suit, en référence aux figures annexées, qui représentent :

- la figure 1, un dispositif permettant de mettre en œuvre un procédé selon un mode de réalisation de l'invention ;
- la figure 2, des courbes représentant l'évolution de l'intensité d'un faisceau lumineux éclairant un échantillon en fonction du temps et l'évolution du paramètre P dans cet échantillon en fonction du temps ;
- la figure 3a, une courbe représentant l'évolution du paramètre Q calculé par la méthode des rectangles et celle du paramètre P en fonction de la fréquence du faisceau lumineux modulé ;
- la figure 3b, une courbe représentant l'évolution du paramètre Q calculé par la méthode des trapèzes et celle du paramètre P en fonction de la fréquence du faisceau lumineux modulé ;
- la figure 3c, une courbe représentant l'évolution du paramètre Q calculé par la méthode du point milieu et celle du paramètre P en fonction de la fréquence du faisceau lumineux modulé ;
- la figure 4, une courbe représentant la fonction $g(x) = xe^{\frac{(D-1)}{x}}$ lorsque le rapport cyclique D est égal à 0.25, ainsi que l'approximation de cette fonction sur l'intervalle $[0, x_0]$ et sur l'intervalle $[x_0, f_{max}\tau]$ ;
- La figure 5, une courbe représentant la fonction $g(x) = xe^{\frac{(D-1)}{x}}$ lorsque le rapport cyclique D est égal à 0.5, ainsi que l'approximation de cette fonction sur l'intervalle $[0, x_0]$ et sur l'intervalle $[x_0, f_{max}\tau]$ ;
- La figure 6, une courbe représentant la fonction $g(x) = xe^{\frac{(D-1)}{x}}$ lorsque le rapport cyclique D est égal à 0.75, ainsi que l'approximation de cette fonction sur l'intervalle $[0, x_0]$ et sur l'intervalle $[x_0, f_{max}\tau]$ ;
- La figure 7, une courbe représentant l'évolution du paramètre $P_{trans}$ en 6 points en fonction de la fréquence $f$ du faisceau de lumière modulé au niveau du point d'intérêt. Les valeurs expérimentales de $P_{dark}$ et de $P_{sat}$ sont également représentées ;
- Les figures 8a et 8b, deux images représentant la cartographie de la durée de vie des porteurs (80x80 points) obtenues par la méthode des rectangles et par la méthode des trapèzes.

## DESCRIPTION DETAILLEE

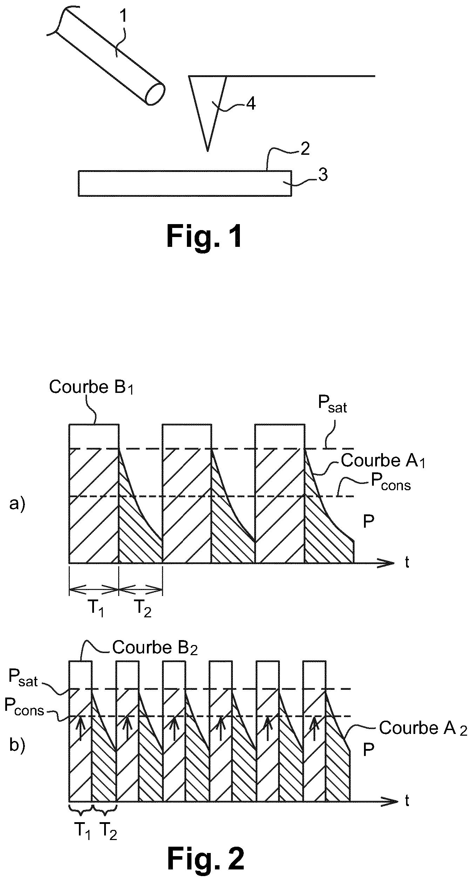

La figure 1 représente un dispositif permettant de mettre en œuvre un procédé selon un mode de réalisation de l'invention de façon à déterminer localement la durée de vie des porteurs à la surface d'un échantillon. Cet échantillon est un matériau semi-conducteur. Le dispositif comporte une source lumineuse 1 permettant d'émettre un faisceau lumineux contrôlé sur une surface 2 de l'échantillon 3. En fonction des étapes du procédé, ce faisceau lumineux peut être :

- éteint,
- continu ou
- modulé, c'est-à-dire que son intensité varie en fonction du temps.

Le dispositif comporte également un microscope à force atomique 4 permettant de mesurer localement un paramètre P de l'échantillon. Le paramètre P mesuré est un paramètre représentatif des porteurs de charge dans l'échantillon.

Lorsque le microscope à force atomique est un microscope à force Kelvin (Kelvin Force Microscope), le paramètre P mesuré est une différence de potentiel de contact, en volt. La technique utilisée pour mesurer la différence de potentiel de contact par microscopie à force Kelvin est par exemple détaillée dans le document Glatzel T, Lux-Steiner M C, Strassburg E, Boag A and Rosenwaks Y 2007 Principles of Kelvin Probe Force Microscopy (New York: Springer) pp 113-31.

Lorsque le microscope à force atomique est un microscope à force électrostatique (Electrostatic Force Microscope), le paramètre P mesuré est une fréquence, en Hz. La technique utilisée pour mesurer la fréquence par microscopie à force électrostatique est par exemple détaillée dans le document Electric force microscopy of individually charged nanoparticles on conductors: An analytical model for quantitative charge imaging" - T. Mélin, H. Diesinger, D.Deremies, D. Stiévenard, Physical Review B, 69, 3 (2004).

Lorsque le microscope à force atomique est un microscope à force atomique conductrice (Conducting AFM), le paramètre P est un courant, en ampère. La technique utilisée pour mesurer ce courant par microscopie à force atomique conductrice est par exemple détaillée dans le document C. Teichert and I. Beinik, in Scanning Probe Microscopy in Nanoscience and Nanotechnology, edited by B. Bhushan, Vol. 2, Chap. 23 (Springer, Berlin, 2011).

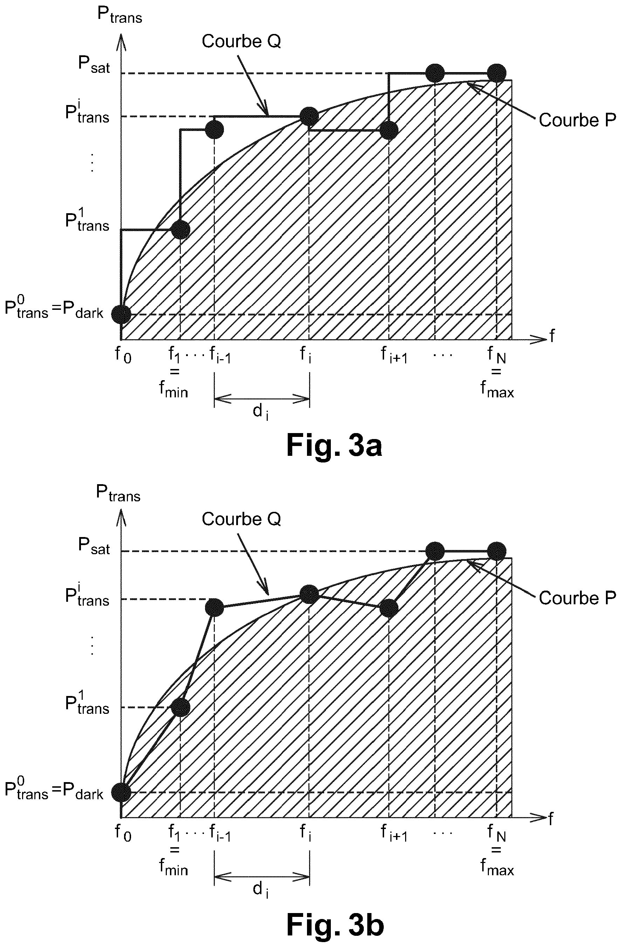

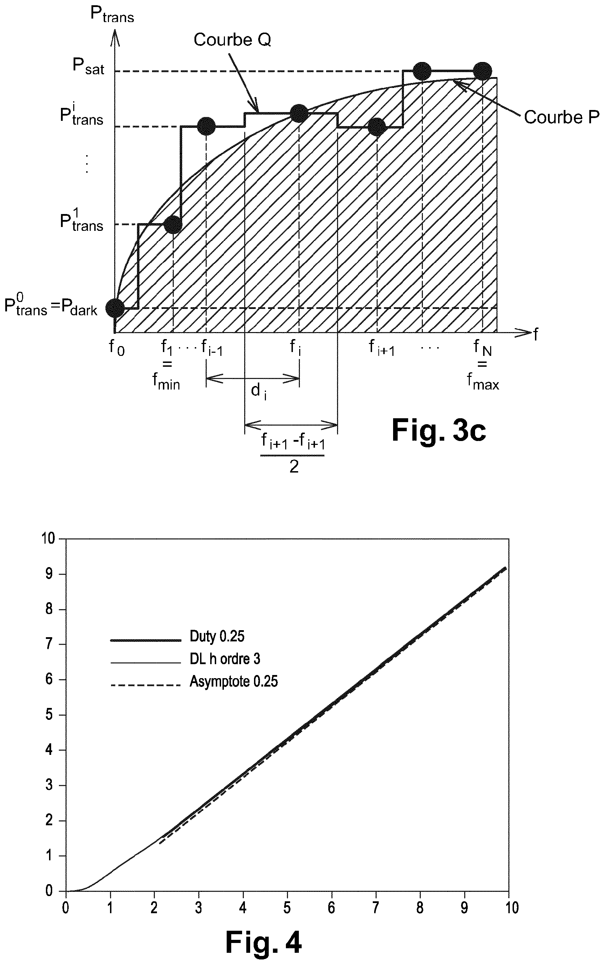

La figure 3 représente l'évolution du paramètre P (courbes B1 et B2) en fonction de l'évolution de l'intensité du faisceau lumineux modulé (courbes A1 et A2). Le paramètre P étant représentatif des porteurs de charge dans le matériau, il varie avec l'illumination du matériau, et notamment avec la fréquence du faisceau de lumière modulée. Ainsi, le paramètre P augmente ou diminue lorsque la fréquence $f_i$ du faisceau lumineux modulé augmente en tendant vers une valeur asymptotique $P_{sat}$. Cette valeur asymptotique $P_{sat}$ correspond à la valeur du paramètre P lorsque l'échantillon est éclairé avec un faisceau de lumière continue. Lorsque l'échantillon est illuminé avec un faisceau de lumière modulé présentant un rapport cyclique D et une fréquence $f_i$, le paramètre P est égal à $P_{trans}^i$. Plus la fréquence $f_i$ du faisceau de lumière modulée augmente, plus la valeur de $P_{trans}^i$ se rapproche de $P_{sat}$ comme représenté sur la figure 3.

Le procédé selon l'invention permet de déterminer facilement et précisément la durée de vie des porteurs. Le procédé va maintenant être expliqué lorsqu'il est appliqué pour déterminer la durée de vie des porteurs en un point de l'échantillon, appelé « point d'intérêt » dans la suite.

Le procédé comporte tout d'abord une étape de mesure du paramètre P par une technique de microscopie à force atomique au niveau du point d'intérêt en l'absence d'illumination. On obtient ainsi une valeur $P_{dark}$.

Le procédé comporte ensuite une étape au cours de laquelle le point d'intérêt est éclairé avec un faisceau de lumière continue. L'intensité du faisceau de lumière continue doit être identique à l'intensité instantanée du pulse de lumière modulé. Le procédé comporte alors une étape de mesure du paramètre P au niveau du point d'intérêt. On obtient ainsi une valeur $P_{sat}$.

Le procédé comporte ensuite une suite d'étapes, comportant chacune les sous étapes suivantes :

- le point d'intérêt est éclairé avec un faisceau de lumière modulée présentant une fréquence $f_i$ et un rapport cyclique D. Le rapport cyclique D est défini comme étant le rapport entre la durée T1 d'illumination au cours d'un cycle sur la durée totale T1+T2 d'un cycle. Le rapport cyclique D est de préférence choisi strictement inférieur à 1. En outre, le rapport cyclique D est de préférence choisi de façon à ce que la durée T1 d'illumination soit supérieure au temps de génération des porteurs;

- le paramètre P est mesuré au niveau du point d'intérêt de façon à obtenir une valeur $P_{trans}^i$.

Ces sous étapes sont répétées en modifiant à chaque fois la fréquence $f_i$. Ainsi, entre deux étapes successives de cette suite d'étapes, la fréquence $f_i$ augmente, tandis que le rapport cyclique reste de préférence constant. Lors de la première étape de cette suite d'étapes, la fréquence $f_i$ est égale à $f_{min}$. Lors de la dernière étape de cette suite d'étapes, la fréquence $f_i$ est égale à $f_{max}$. La fréquence maximale $f_{max}$ est de préférence choisie de façon à ce que, lorsque $f_i$ est égal à $f_{max}$, la valeur $|P_{trans} - P_{dark}|$ mesurée soit supérieure ou égale à 95% de la valeur $|P_{sat} - P_{dark}|$ mesurée. $f_{min}$ est de préférence choisie de façon à ce que, lorsque $f_i$ est égal à $f_{min}$ la valeur $|P_{trans} - P_{dark}|$ mesure soit inférieure à 105% * D* $|P_{sat} - P_{dark}|$, où D est rapport cyclique de la lumière modulé. De préférence, il faut mesurer $P_{trans}$ au moins pour 5 fréquences avec le pas en fréquence préférablement constant pour avoir une bonne précision sur l'estimation de la durée de vie des porteurs.

Une fois que l'on a mesuré le paramètre P pour chaque faisceau lumineux modulé présentant une fréquence donnée, le procédé comporte une étape de calcul d'une interpolation S par une formule de quadrature d'une courbe représentant $P_{trans}^i$ en fonction de $f_i$.

Pour cela, plusieurs formules de quadrature différentes peuvent être utilisées.

Ainsi, selon un premier mode de réalisation, on utilise une méthode dite des rectangles, dans laquelle S est calculée en utilisant la formule suivante :

$$S = \sum_{i=1}^{i=N} (P_{trans}^i - P_{dark})\,(f_i - f_{i-1})$$

Selon un deuxième mode de réalisation, on utilise une méthode dite des trapèzes, dans laquelle S est calculée en utilisant la formule suivante :

$$S = \frac{1}{2}\sum_{i=1}^{i=N} (P_{trans}^i + P_{trans}^{i-1} - 2P_{dark})\,(f_i - f_{i-1})$$

Avec $f_0 = 0$ , $f_1 = f_{min}$ et $f_N = f_{max}$

Selon un troisième mode de réalisation, on utilise une méthode dite du point milieu, dans laquelle S est calculée en utilisant la formule suivante :

$$S = (P_{trans}^N - P_{dark})\left(\frac{f_N - f_{N-1}}{2}\right) + \sum_{i=1}^{i=N-1} (P_{trans}^i - P_{dark})\left(\frac{f_{i+1} - f_{i-1}}{2}\right)$$

Avec $f_0 = 0$ , $f_1 = f_{min}$ et $f_N = f_{max}$

La méthode des trapèzes est plus complexe mais également plus précise que la méthode des rectangles et la méthode du point milieu. Le procédé fonctionne correctement avec les trois méthodes.

Le procédé comporte ensuite une étape de calcul de la durée de vie des porteurs grâce à la formule suivante :

$$\tau = \frac{\frac{x_0^2}{2} + x_0(D-1) - K}{\frac{S}{(P_{sat} - P_{dark})} - (1+D)f_{max}}$$

Dans laquelle $X_0$ et K sont des constantes.

*La constante* $x_0$ correspond à l'abscisse à partir de laquelle la courbe représentant $g(x) = xe^{\frac{(D-1)}{x}}$ prend un comportement asymptotique. Le point $x_0$ est calculé de telle sorte que $g'(x_0) = C$. De préférence, *C* est supérieur ou égale à 0.95. Par exemple, pour une valeur de C = 0.95 et un rapport cyclique de 0.5, on obtient $x_0 = 1.4$.

La constante K est de préférence calculée avec la formule suivante :

$$K = \sum_0^n (-1)^n \frac{1}{(n+2)!} x_0^{n+2} \times h^{(n)}(x_0) = constante$$

où $h^{(n)}(x)$ est la dérivée n$^{ième}$ de la fonction réelle $e^{\frac{(D-1)}{x}}$ calculée pour $x = x_0$.

La dérivée n$^{ième}$ se calcule à l'aide la relation :

$$h^{(n)}(x) = e^{\frac{(D-1)}{x}} \sum_{b_1 + 2b_2 + \cdots + nb_n = n} \frac{n!}{b_1! b_2! \dots b_n!} \prod_{j=1}^n \left(\frac{(1+D)^j}{x^{j+1}}\right)^{b_j}.$$

Le procédé est donc particulièrement avantageux car il permet de calculer à l'aide de calculs simples mais précis la durée de vie des porteurs en un point de l'échantillon.

**Justification des calculs effectués** :

En référence à la figure 3, le principe du calcul effectué va maintenant être expliqué.

La valeur du paramètre P lorsque l'échantillon est éclairé en continu est donnée par $P_{sat}$. La valeur du paramètre P lorsque l'échantillon n'est pas éclairé est donné par $P_{dark}$. La valeur du paramètre P lorsque l'échantillon est illuminé par un faisceau de lumière modulé de fréquence $f$ est quant à elle donnée par $P_{trans}$. Afin de simplifier la démonstration qui suit, au lieu de considérer $P_{trans}$ et $P_{sat}$, on s'intéressera à :

$$P_{av} = P_{trans} - P_{dark}$$

et

$$P_{max} = P_{sat} - P_{dark}.$$

$P_{av}$ dépend de la fréquence $f$ en suivant la relation suivante :

$$P_{av} = P_{max}\left(D + \tau f\left(1 - e^{\left(\frac{D-1}{\tau f}\right)}\right)\right)$$

Dans laquelle:

$\tau$ est la durée de vie des porteurs;

$f$ est la fréquence de la lumière modulée qui éclaire l'échantillon ;

D est le rapport cyclique de la lumière modulée qui éclaire l'échantillon.

Pour extraire la durée de vie des porteurs $\tau$, on cherche à calculer l'intégrale de $P_{av}$. Afin de simplifier ce calcul, on approxime cette intégrale par l'interpolation S suivante :

$$\int_0^{f_{max}} P_{av}(f)df \approx \sum_{i=1}^{i=N} P_{av}^i d_i = S$$

Avec :

$P_{av}^i$ le $i^{ème}$ point de mesure expérimental, défini par $P_{trans}^i - P_{dark}$ lorsque l'on utilise la méthode des rectangles ou par $(P_{trans}^i + P_{trans}^{i-1} - 2P_{dark})$ lorsque l'on utilise la méthode des trapèzes.

$d_i = f_i - f_{i-1}$ l'intervalle de fréquence défini entre les points de mesures i et i+1,

$f_{max}$ la fréquence maximale de mesure.

N représente le nombre de mesures réalisé dans la plage de fréquence comprise entre $f_{min}$ et $f_{max}$

Schématiquement, cela se traduit en approximant que l'aire sous la courbe P de la figure 3 est égale à l'aire sous la courbe Q de la même figure.

Nous cherchons donc à calculer :

$$\int_0^{f_{max}} P_{av}(f)df = P_{max} \int_0^{f_{max}} \left\{ D - f\tau \left( e^{\frac{-(1-D)}{f\tau}} - 1 \right) \right\} df$$

$$= P_{max} \left\{ \int_0^{f_{max}} Ddf + \int_0^{f_{max}} f\tau \, df + \int_0^{f_{max}} -f\tau e^{\frac{-(1-D)}{f\tau}} df \right\}$$

Nous cherchons donc à calculer les trois intégrales suivantes :

$$\int_0^{f_{max}} Ddf = Df_{max} \tag{1}$$

$$\int_0^{f_{max}} f\tau \, df = \frac{f_{max}^2 \tau}{2} \tag{2}$$

$$\int_0^{f_{max}} -f\tau e^{\frac{-(1-D)}{f\tau}} df \tag{3}$$

Les intégrales (1) et (2) sont des constantes faciles à calculer. La troisième intégrale par contre n'a pas de solution analytique simple. Néanmoins, nous pouvons décomposer la fonction à intégrer d'une part par un développement limité et d'autre part par son asymptote.

Posons $x = f\tau$. Dans ce cas la fonction à intégrer se réécrit $g(x) = xe^{\frac{(D-1)}{x}}$

Les bornes d'intégration de cette fonction sont $[x_0, f_{max}\tau]$ avec $f_{max}\tau$ variant typiquement de 1 à 100.

Le calcul de l'intégrale de la fonction $g(x) = xe^{\frac{(D-1)}{x}}$ est effectué comme suit :

- Pour $x \leq x_0$, l'intégrale de la fonction est approximée par son développement limité en $.x = x_0$.
- Pour $x > x_0$, l'intégrale de la fonction est approximée par une fonction affine.

Le point $x_0$ correspond à l'abscisse à partir de laquelle la courbe représentant $g(x) = xe^{\frac{(D-1)}{x}}$ prend un comportement asymptotique. Le point $x_0$ est calculé de tel sorte que $g'(x_0) = C$. De préférence, $C$ est supérieur ou égale à 0.95. Par exemple, pour une valeur de $C = 0.95$ et un rapport cyclique de 0.5, on obtient une valeur de $x_0 = 1.4$.

**Approximation de la fonction $g(x)$ sur l'intervalle $[0, x_0]$** :

La fonction $g(x) = xh(x)$ est approximée par une fonction sur l'intervalle $[0, x_0]$. Pour cela, on considère la fonction

$g(x) = xe^{\frac{(D-1)}{x}} = x \times h(x)$ avec $h(x) = e^{\frac{(D-1)}{x}}$

On effectue un développement limité à l'ordre n de la fonction $h(x)$ au point $x = x_0$.

$$h(x) = \sum_0^n \frac{1}{n!} h^{(n)}(x_0) (x - x_0)^n$$

Avec $h^{(n)}(x_0)$ la dérivée $n$-ième de la fonction $h(x)$ calculée pour $x = x_0$ et défini par :

$$h^{(n)}(x_0) = e^{\frac{(D-1)}{x_0}} \sum_{b_1 + 2b_2 + \cdots + nb_n = n} \frac{n!}{b_1! b_2! \dots b_n!} \prod_{j=1}^n \left( \frac{(1+D)^j}{x_0^{j+1}} \right)^{b_j}$$

La fonction $g(x) = xe^{\frac{(D-1)}{x}}$ est donc approximée sur l'intervalle $[0,x_0]$ par une fonction égale à :

$$g(x) = xe^{\frac{(D-1)}{x}} \approx x \times \sum_0^n \frac{1}{n!} h^{(n)}(x_0)\,(x-x_0)^n$$

De préférence, n est égal à 3. Dans ce cas :

$$h(x) = h(x_0) + \frac{1}{1!} h^{(1)}(x_0)\,(x-x_0) + \frac{1}{2!} h^{(2)}(x_0)\,(x-x_0)^2 + \frac{1}{3!} h^{(3)}(x_0)\,(x-x_0)^3$$

où $h^{(1)}, h^{(2)}, h^{(3)}$ sont respectivement la dérivée première, seconde et troisième de la fonction $h(x)$ définies par les relations suivantes :

$$h^{(1)} = -\frac{(D-1)}{x^2} h(x)$$

$$h^{(2)} = \left(-\frac{2}{x} - \frac{(D-1)}{x^2}\right) h'(x)$$

$$h^{(3)} = \left(\frac{6}{x^2} + \frac{6(D-1)}{x^3} + \frac{(D-1)^2}{x^4}\right) h'(x)$$

Pour n=3, la fonction $g(x)$ est donc approximée sur l'intervalle $[0,x_0]$ par une fonction égale à

$$x_0 \times \left( h(x_0) + \frac{1}{1!} h^{(1)}(x_0)\,(x-x_0) + \frac{1}{2!} h^{(2)}(x_0)\,(x-x_0)^2 + \frac{1}{3!} h^{(3)}(x_0)\,(x-x_0)^3\right)$$

## Approximation de la fonction $g(x)$ pour $x > x_0$ :

La fonction $g(x)$ est approximée par une fonction affine de type $ax + b$ pour $x > x_0$.

La pente $a$ est donnée par la relation :

$$a = \lim_{x \to \infty} \frac{g(x)}{x} = \lim_{x \to \infty} e^{\frac{D-1}{x}} = 1$$

L'ordonnée à l'origine $b$ est donnée par la relation :

$$b = \lim_{x \to \infty} g(x) - ax = \lim_{x \to \infty} x\left(e^{\frac{D-1}{x}} - 1\right) \approx \lim_{x \to \infty} x\left(1 + \frac{D-1}{x} - 1\right) = D - 1$$

On obtient la fonction affine suivante $x + (D - 1)$ comme approximation de la fonction $g(x)$ sur l'intervalle $[x_0, f_{max}\tau]$

## Représentation graphique

La figure 4 représente la fonction $g(x)$ lorsque le rapport cyclique D est égal à 0.25, ainsi que son approximation sur l'intervalle $[0,x_0]$ et celle sur l'intervalle $[x_0, f_{max}\tau]$ . Lorsque le rapport cyclique D est égal à 0.25, $x_0 = 2$.

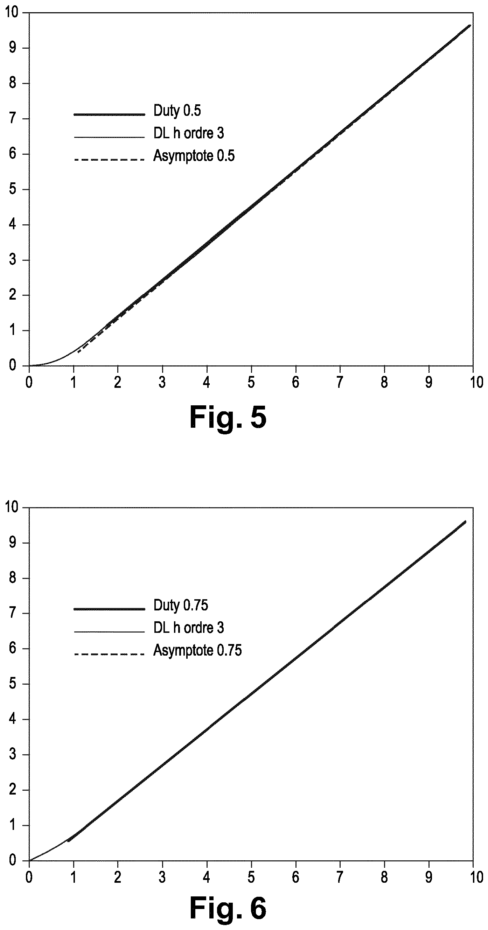

La figure 5 représente la fonction $g(x)$ lorsque le rapport cyclique D est égal à 0.5, ainsi que son approximation sur l'intervalle [0,$x_0$] et celle sur l'intervalle [$x_0$,$f_{max}\tau$]. Lorsque le rapport cyclique D est égal à 0.5, $x_0$ =1,4.

La figure 6 représente la fonction $g(x)$ lorsque le rapport cyclique D est égal à 0.75, ainsi que son approximation sur l'intervalle [0,$x_0$] et celle sur l'intervalle [$x_0$,$f_{max}\tau$]. Lorsque le rapport cyclique D est égal à 0.75, $x_0$ =0.8.

## Calcul de l'intégrale de la fonction g(x) sur l'intervalle [0, $f_{max}\tau$]

Nous cherchons à évaluer l'intégrale suivante :

$$\int_0^{f_{max}} -f\tau e^{\frac{-(1-D)}{f\tau}} df = -\frac{1}{\tau} \int_0^{f_{max}\tau} x e^{\frac{D-1}{x}} dx = -\frac{1}{\tau} \left( \int_0^{x_0} x e^{\frac{D-1}{x}} dx + \int_{x_0}^{f_{max}\tau} x e^{\frac{D-1}{x}} dx \right)$$

Qui se décompose en une somme de deux intégrales :

*Intégrale n°1:*

Pour calculer cette intégrale sur l'intervalle [0, $x_0$], on se sert du développement limité d'ordre n explicité précédemment :

$$\int_0^{x_0} g(x)dx = \int_0^{x_0} x e^{\frac{(D-1)}{x}} dx \approx \int_0^{x_0} x \sum_0^n \frac{1}{n!} h^{(n)}(x_0) (x-x_0)^n dx$$

Les fonctions sont dérivables à l'infini, les intégrales bornées. On obtient donc :

$$\int_0^{x_0} g(x)dx \approx \sum_0^n \int_0^{x_0} x \frac{1}{n!} h^{(n)}(x_0) (x-x_0)^n dx = \sum_0^n \frac{1}{n!} h^{(n)}(x_0) \int_0^{x_0} x(x-x_0)^n dx$$

En réalisant une intégration par parties, on obtient :

$$\int_0^{x_0} g(x)dx \approx \sum_0^n \frac{1}{n!} h^{(n)}(x_0) \left( -\int_0^{x_0} \frac{(x-x_0)^{n+1}}{n+1} dx \right)$$

$$\int_0^{x_0} g(x)dx \approx \sum_0^n \frac{1}{n!} h^{(n)}(x_0) \left( \frac{(-x_0)^{n+2}}{(n+1)(n+2)} \right)$$

$$\int_0^{x_0} g(x)dx \approx \sum_0^n \frac{(-1)^n}{(n+2)!} h^{(n)}(x_0){x_0}^{n+2} = K = constante$$

K étant une constante qui ne dépend pas de $\tau$

De préférence, n est égal à 3. Dans ce cas,

$$K = \frac{x_0^2}{2} h(x_0) - \frac{x_0^3}{6} h'(x_0) + \frac{x_0^4}{24} h''(x_0) - \frac{x_0^5}{120} h'''(x_0)$$

*Intégrale n°2:*

Pour calculer cette intégrale sur l'intervalle [$x_0$, $f_{max}\tau$], on se sert de l'expression de fonction asymptotique explicité plus haut. On obtient :

$$\int_{x_0}^{f_{max}\tau} xe^{\frac{D-1}{x}} dx \sim \int_{x_0}^{f_{max}\tau} \left(x + (D-1)\right)dx = \int_{x_0}^{f_{max}\tau} x \, dx + (D-1)\int_{x_0}^{f_{max}\tau} dx$$

$$\int_{x_0}^{f_{max}\tau} xe^{\frac{D-1}{x}} dx \sim \left(\frac{(f_{max}\tau)^2}{2} - \frac{x_0^2}{2}\right) + (D-1)(f_{max}\tau - x_0)$$

On obtient ainsi une expression analytique approchée pour l'intégrale $\int_0^{f_{max}} -f\tau e^{\frac{-(1-D)}{f\tau}} df$

$$\int_0^{f_{max}} -f\tau e^{\frac{-(1-D)}{f\tau}} df \sim -\frac{K}{\tau} - \left(\frac{\tau f_{max}^2}{2} - \frac{x_0^2}{2\tau}\right) + (1-D)\left(f_{max} - \frac{x_0}{\tau}\right)$$

$$\int_0^{f_{max}} -f\tau e^{\frac{-(1-D)}{f\tau}} df \sim -\frac{K}{\tau} - \frac{\tau f_{max}^2}{2} + \frac{x_0^2}{2\tau} + (1-D)f_{max} - (1-D)\frac{x_0}{\tau}$$

$$\int_0^{f_{max}} -f\tau e^{\frac{-(1-D)}{f\tau}} df \sim -\frac{\tau f_{max}^2}{2} + \frac{1}{\tau}\left(\frac{x_0^2}{2} + x_0(D-1)\right) + (1-D)f_{max} - \frac{K}{\tau}$$

**Expression du temps de vie de porteur**

*L'intégrale* $\int_0^{f_{max}} P_{av}(f)df$ s'écrit donc sous une forme analytique approchée

$$\int_0^{f_{max}} P_{av}(f)df = P_{max}\left\{\int_0^{f_{max}} D df + \int_0^{f_{max}} f\tau \, df + \int_0^{f_{max}} -f\tau e^{\frac{-(1-D)}{f\tau}} df\right\}$$

$$\int_0^{f_{max}} P_{av}(f)df = P_{max}\left(DF + \frac{f_{max}^2\tau}{2} - \frac{\tau f_{max}^2}{2} + \frac{1}{\tau}\left(\frac{x_0^2}{2} + x_0(D-1)\right) + (1-D)f_{max} - \frac{K}{\tau}\right) = S$$

$$\int_0^{f_{max}} P_{av}(f)df = P_{max}\left(\frac{1}{\tau}\left(\frac{x_0^2}{2} + x_0(D-1)\right) + (1+D)f_{max} - \frac{K}{\tau}\right) = S$$

$$\int_0^{f_{max}} P_{av}(f)df = P_{max}\left(\frac{1}{\tau}\left(\frac{x_0^2}{2} + x_0(D-1) - K\right) + (1+D)f_{max}\right) = S$$

De cette expression, on extrait le temps de vie $\tau$ de porteur donné par la relation suivante

$$\tau = \frac{\frac{x_0^2}{2} + x_0(D-1) - K}{\frac{S}{P_{max}} - (1+D)f_{max}}$$

Cette expression peut également être exprimée sous la forme suivante :

$$\tau = \frac{\frac{x_0^2}{2} + x_0(D-1) - K}{\frac{S}{(P_{sat}-P_{dark})} - (1+D)f_{max}}$$

Avec $x_0$ le point correspondant à l'abscisse à partir de laquelle la courbe représentant $g(x) = xe^{\frac{(D-1)}{x}}$ prend un comportement asymptotique. Le point $x_0$ est calculé de tel sorte que $g'(x_0) = C$. De préférence, $C$ est supérieur ou égale à 0.95. Par exemple, pour une valeur de $C$ = 0.95 et un rapport cyclique de 0.5, il est aisé de trouver la valeur de $x_0$= 1.4 à l'aide d'un tableur.

$$K = \sum_0^n \ (-1)^n \frac{1}{(n+2)!} x_0^{n+2} \times h^{(n)}(x_0) = constante$$

où $h^{(n)}(x)$ est la dérivée n$^{\text{ième}}$ de la fonction réelle $e^{\frac{(D-1)}{x}}$ calculée pour $x = x_0$. La dérivée n$^{\text{ième}}$ se calcule à l'aide la relation :

$$h^{(n)}(x) = e^{\frac{(D-1)}{x}} \sum_{b_1+2b_2+\cdots+nb_n=n} \ \frac{n!}{b_1!b_2!...b_n!}\prod_{j=1}^n \left(\frac{(1+D)^j}{x^{j+1}}\right)^{b_j}.$$

Comme indiqué précédemment, l'interpolation S peut être calculée en utilisant plusieurs formules de quadrature et notamment la méthode des rectangles et la méthode des trapèzes.

Selon la méthode des rectangles :

$$S = \sum_{i=1}^{i=N} (P_{trans}^i - P_{dark}) \, (f_i - f_{i-1})$$

Avec $f_0$ = 0, $f_1$ = $f_{min}$ et $f_N$ = $f_{max}$

Selon la méthode des trapèzes :

$$S = \frac{1}{2}\sum_{i=1}^{i=N} (P_{trans}^i + P_{trans}^{i-1} - 2P_{dark}) \, (f_i - f_{i-1})$$

**où** $f_0$ = 0 , $f_1$ = $f_{min}$ et $f_N$ = $f_{max}$

Selon la méthode du point milieu :

$$S = (P_{trans}^N - P_{dark})\left(\frac{f_N - f_{N-1}}{2}\right) + \sum_{i=1}^{i=N-1} \left(P_{trans}^i - P_{dark}\right)\left(\frac{f_{i+1} - f_{i-1}}{2}\right)$$

Avec $f_0$ = 0, $f_1$ = $f_{min}$ et $f_N$ = $f_{max}$

Ces expressions de S sont particulièrement avantageuses car elles permettent de calculer facilement le la durée de vie des porteurs, sans avoir à effectuer de calcul d'intégrale compliqué, mais tout en obtenant une valeur précise pour la durée de vie des porteurs.

En reproduisant le procédé expliqué ci-dessus pour une multiplicité de points d'un échantillon, on peut donc obtenir une cartographie du la durée de vie des porteurs très précise et très rapidement, même lorsque l'échantillon présente une structure complexe.

**Premier exemple de mise en œuvre :**

Le procédé va maintenant être détaillé dans le cas où le paramètre P est une différence de potentiel de contact, mesurée en volt par microscopie de force à sonde de Kelvin. L'échantillon sur lequel est réalisé cet exemple est un échantillon de PBTFB :PCBM (ratio 1:3) Poly(Bi-Thiophene-Fluorene-Benzothiadiazole) : [6,6]-Phenyl-C71-butyric acid methyl ester (voir référence représenté RSC Adv., 2014, 4, 15236).

Le procédé décrit ci-après a été répété en une multiplicité de points (matrice de points). Dans le cas de notre exemple le procédé est répété en 80 x 80 points, espacés les uns des autres de 5 nm de façon à réaliser une cartographie de la durée de vie des porteurs de l'échantillon avec une résolution latérale de 20 nm.

Le procédé comporte tout d'abord une étape de mesure du paramètre P par une technique de microscopie à force de Kelvin au niveau du point d'intérêt en l'absence d'illumination. On obtient ainsi une valeur $P_{dark}$.

Le procédé comporte ensuite une étape au cours de laquelle le point d'intérêt est éclairé avec un faisceau de lumière continue d'une puissance optique de 4 mW par faisceau laser de 2.5 mm². Le procédé comporte alors une étape de mesure du paramètre P au niveau du point d'intérêt. On obtient ainsi une valeur $P_{sat}$.

Le procédé comporte ensuite une suite d'étapes, au cours desquelles le point d'intérêt est éclairé successivement avec des faisceaux de lumière modulée présentant une fréquence $f_i$ et un rapport cyclique D. Dans cet exemple, le rapport cyclique D est égal à 0.5. La fréquence $f_i$ varie de 500 Hz à 3 kHz. Pour chaque faisceau de fréquence $f_i$, le paramètre P est mesuré au niveau du point d'intérêt de façon à obtenir une valeur $P_{trans}^i$.

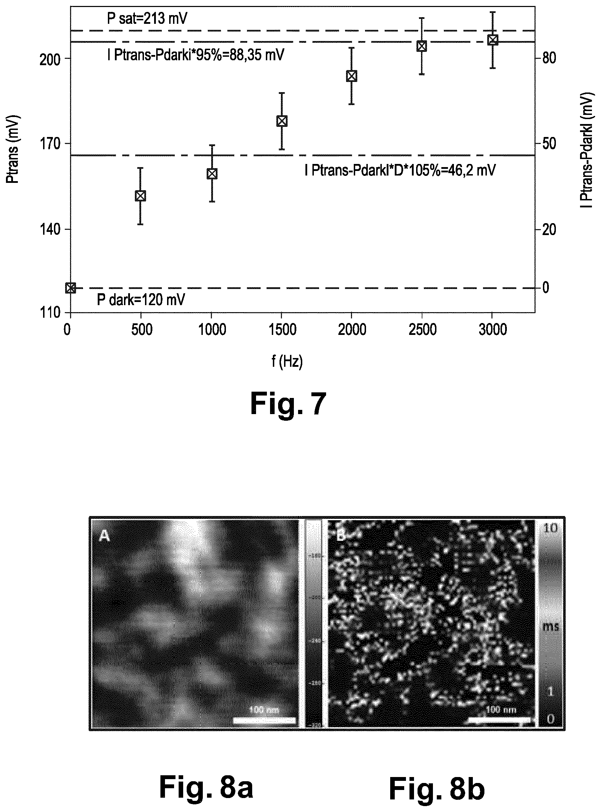

On obtient ainsi pour le premier point d'intérêt de l'échantillon la courbe représenté sur la figure 7 représentant l'évolution de $P_{trans}$ en fonction de la fréquence $f$ du faisceau de lumière modulé au niveau du point d'intérêt.

On observe ainsi que le choix de la fréquence maximale $f_{max}$ et de la fréquence minimale $f_{min}$ est cohérent avec le critère défini précédemment puisque lorsque $f_i$ est égal à $f_{max}$, la valeur $|P_{trans} - P_{dark}|$ mesurée est supérieure ou égale à 95%* $|P_{sat} - P_{dark}|$=88.35 mV (critère valable pour 1 valeur). La fréquence minimale $f_{min}$ est choisie de façon à ce que, lorsque $f_i$ est égal à $f_{min}$ la valeur $|P_{trans} - P_{dark}|$ mesuré soit inférieure à 105% * D* $|P_{sat} - P_{dark}|$=46.2 mV, où D=0.5 (critère valable pour 2 valeurs).

Pour avoir une bonne précision sur l'estimation de la durée de vie des porteurs, nous avons mesuré $P_{trans}$ pour 6 fréquences avec le pas en fréquence constant.

Ainsi, la figure 7 représente l'évolution de $P_{trans}$ en 6 fréquences en fonction de la fréquence $f$ du faisceau de lumière modulé au niveau du point d'intérêt. Les valeurs expérimentales de $P_{dark}$ et de $P_{sat}$ sont également représentées.

Le procédé comporte ensuite une étape de calcul de l'interpolation S.

Selon un mode de réalisation, l'interpolation S peut être obtenue par la méthode des rectangles. L'interpolation S est alors calculée à l'aide de la formule suivante:

$$S = \sum_{i=1}^{i=N} (P_{trans}^i - P_{dark})\,(f_i - f_{i-1}) = 356000\,mV.Hz$$

Selon un deuxième mode de réalisation, l'interpolation S peut être obtenue par la méthode des trapèzes. L'interpolation S est alors calculée à l'aide de la formule suivante :

$$S = \frac{1}{2}\sum_{i=1}^{i=N} (P_{trans}^i + P_{trans}^{i-1} - 2P_{dark})\,(f_i - f_{i-1}) = 332750\,mV.Hz$$

Avec $N$ = 6, $f_0$ = 0, $f_1$ = $f_{min}$ = 500 $Hz$ et $f_N$ = $f_{max}$ = 3 $kHz$

Le procédé comporte ensuite une étape de calcul la durée de vie des porteurs au niveau du point d'intérêt grâce à la formule suivante :

$$\tau = \frac{\frac{x_0^2}{2} + x_0(D-1) - K}{\frac{S}{(P_{sat} - P_{dark})} - (1+D)f_{max}}$$

Avec
$x_0$ = 1,4 pour un rapport D de 0,5 et un coefficient de 0.95.

$$K = \frac{x_0^2}{2} h(x_0) - \frac{x_0^3}{6} h'(x_0) + \frac{x_0^4}{24} h''(x_0) - \frac{x_0^5}{120} h'''(x_0) = \left(\frac{1.96}{2} + \frac{1.4}{12} + \frac{1.15}{24} + \frac{5.055}{168}\right) e^{-\frac{0.5}{1.4}}$$
$$= 1{,}684$$

On obtient finalement une estimation du temps de vie égale à :

- 382 µs par la méthode des rectangles ;
- 358 µs par la méthode des trapèzes.

On reproduit alors ce procédé en une multiplicité de points de l'échantillon de façon à obtenir la cartographie de la durée de vie des porteurs représenté sur les figures 8a et 8b. Ainsi, la figure 8a représente la cartographie de la durée de vie des porteurs obtenue par la méthode des rectangles. La figure 8b représente la cartographie de la durée de vie des porteurs obtenue par la méthode des trapèzes.

**Deuxième exemple de mise en œuvre :**

Le procédé peut également être mis en œuvre de la même manière lorsque les mesures sont effectuées par microscopie à force électrostatique. Dans ce cas, le paramètre P est une fréquence, mesurée en hertz.

**Troisième exemple de mise en œuvre :**

Le procédé peut également être mis en œuvre de la même manière lorsque les mesures sont effectuées par microscopie à force atomique conductrice. Dans ce cas, le paramètre P est un courant, mesuré en ampère.

Naturellement le procédé n'est pas limité aux modes de réalisation décrite dans la description détaillée et des variantes pourraient être envisagées sans sortir du cadre de l'invention. Ainsi, le développement limité de la fonction $h(x)$ au point $x = x_0$ a été fait à l'ordre 3 dans la description détaillée, mais l'invention s'étend également au cas où un développement limité d'un autre ordre, inférieur ou supérieur, est effectué. Par ailleurs, d'autres paramètres P que ceux décrits pourraient être mesurés, par exemple un courant tunnel mesure par STM (scanning tunneling microscopy).

Par ailleurs, d'autres formules de quadratures pourraient être utilisées pour calculer S, comme par exemple, la méthode de Simpson ou encore la méthode de Romberg. Cependant, l'utilisation de ces autres méthodes nécessitent un nombre de points de mesures plus important ce qui augmente le temps d'acquisition et complexifie le calcul.

**Revendications**

1. Procédé de détermination d'une durée de vie des porteurs en au moins un point d'une surface (2) d'un échantillon (3), le procédé comportant les étapes suivantes :

   - en l'absence d'illumination, mesurer, au niveau du point, un paramètre P représentatif de la densité des porteurs de l'échantillon (3) par une technique de microscopie à force atomique de façon à obtenir une valeur $P_{dark}$ ;
   - éclairer le point avec un faisceau de lumière continue ;
   - mesurer, au niveau du point, le paramètre P représentatif de la densité des porteurs de l'échantillon (3) par la technique de microscopie à force atomique de façon à obtenir une valeur $P_{sat}$ ;
   - éclairer successivement le point avec des faisceaux de lumière modulée présentant chacun une fréquence $f_i$ différente, la fréquence $f_i$ variant d'un faisceau de lumière modulée au suivant, les fréquences $f_i$ étant comprises entre une fréquence minimale $f_{min}$ et une fréquence maximale $f_{max}$, les faisceaux de lumière modulée présentant un rapport cyclique D, le rapport cyclique D étant défini comme étant le rapport entre la durée d'illumination et la somme de la durée d'illumination et d'extinction au cours d'un cycle ;
- pour chaque faisceau de lumière modulée, mesurer, au niveau du point, le paramètre P représentatif de la densité des porteurs de l'échantillon (3) par la technique de microscopie à force atomique de façon à obtenir une valeur $P^i_{trans}$ pour chaque fréquence $f_i$ ;

**caractérisé en ce que** la méthode comprend aussi les étapes de:

- calculer par une formule de quadrature une interpolation S, au niveau du point, d'une courbe représentant $P^i_{trans}$ en fonction des fréquences $f_i$ ;
- calculer la durée de vie des porteurs, au niveau du point, en utilisant la formule suivante :

$$\tau = \frac{\frac{x_0^2}{2} + x_0(D-1) - K}{\frac{S}{(P_{sat} - P_{dark})} - (1+D)f_{max}}$$

Dans laquelle $x_0$ et $K$ sont des constantes.

2. Procédé selon la revendication 1, dans lequel l'interpolation S est calculée par la formule de quadrature suivante :

$$S = \sum_{i=1}^{i=N} (P^i_{trans} - P_{dark})(f_i - f_{i-1})$$

3. Procédé selon la revendication 1, dans lequel l'interpolation S est calculée par la formule de quadrature suivante :

$$S = \frac{1}{2}\sum_{i=1}^{i=N} (P^i_{trans} + P^{i-1}_{trans} - 2P_{dark})(f_i - f_{i-1})$$

4. Procédé selon la revendication 1, dans lequel l'interpolation S est calculée par la formule de quadrature suivante :

$$S = (P^N_{trans} - P_{dark})\left(\frac{f_N - f_{N-1}}{2}\right) + \sum_{i=1}^{i=N-1}(P^i_{trans} - P_{dark})\left(\frac{f_{i+1} - f_{i-1}}{2}\right)$$

5. Procédé selon l'une des revendications précédentes, dans lequel le paramètre $x_0$ a une valeur telle que $g'(x_0) =$ 0.95 avec $g(x) = xe^{\frac{(D-1)}{x}}$.

6. Procédé selon l'une des revendications précédentes, dans lequel la constante K est donnée par la formule suivante :

$$K = \sum_{0}^{n} (-1)^n \frac{1}{(n+2)!} x_0^{n+2}$$

$$\times e^{\frac{(D-1)}{x_0}} \sum_{b_1 + 2b_2 + \cdots + nb_n = n} \frac{n!}{b_1! \, b_2! \ldots b_n!} \prod_{j=1}^{n} \left( \frac{(1+D)^j}{x_0^{j+1}} \right)^{b_j}$$

**7.** Procédé selon l'une des revendications 1 à 6, dans lequel la technique de microscopie à force atomique est une technique de microscopie à force Kelvin, le paramètre P mesuré étant une différence de potentiel de contact.

**8.** Procédé selon l'une des revendications 1 à 6, dans lequel la technique de microscopie à force atomique est une technique de microscopie à force électrostatique, le paramètre P mesuré étant une fréquence.

**9.** Procédé selon l'une des revendications 1 à 6, dans lequel la technique de microscopie à force atomique est une technique de microscopie à force atomique conductrice, le paramètre P mesuré étant un courant.

**10.** Procédé selon l'une des revendications précédentes, dans lequel le rapport cyclique D est égal à 1/2.

**11.** Procédé selon l'une des revendications précédentes, dans lequel chaque faisceau de lumière modulée est un faisceau laser.

**12.** Procédé de cartographie de la durée de vie des porteurs d'une surface (2) d'un échantillon (3), dans lequel le procédé de détermination de la durée de vie des porteurs selon l'une des revendications précédentes est répété en plusieurs points de l'échantillon (3) de façon à effectuer une cartographie de la durée de vie des porteurs.

**Patentansprüche**

**1.** Bestimmungsverfahren einer Lebensdauer der Träger wenigstens eines Punktes einer Oberfläche (2) einer Probe (3), wobei das Verfahren die folgenden Schritte umfasst:

- Messen eines Parameters P, der die Dichte der Träger der Probe (3) darstellt, bei fehlender Beleuchtung an einem Punkt durch eine Mikroskopietechnik mit Atomkraft derart, dass ein Wert $P_{dark}$ erhalten wird;
- Beleuchten des Punktes mit einem kontinuierlichen Lichtbündel;
- Messen des Parameters P, der die Dichte der Träger der Probe (3) darstellt, an einem Punkt durch die Mikroskopietechnik mit Atomkraft derart, dass ein Wert $P_{sat}$ erhalten wird;
- sukzessives Beleuchten des Punktes mit modulierten Lichtbündeln, die jeweils eine unterschiedliche Frequenz $f_i$ aufweisen, wobei die Frequenz $f_i$ von einem modulierten Lichtbündel zum nächsten variiert, wobei die Frequenzen $f_i$ zwischen einer Mindestfrequenz $f_{min}$ und einer Höchstfrequenz $fmax$ inbegriffen sind, wobei die modulierten Lichtbündel ein zyklisches Verhältnis D aufweisen, wobei das zyklische Verhältnis D als das Verhältnis zwischen der Beleuchtungsdauer und der Summe der Beleuchtungs- und Ausschaltdauer im Verlauf eines Zyklus definiert ist;
- für jedes modulierte Lichtbündel am Punkt Messen des Parameters P, der die Dichte der Träger der Probe (3) darstellt, durch die Mikroskopietechnik mit Atomkraft derart, dass ein Wert $P^i_{trans}$ für jede Frequenz $f_i$ erhalten wird;

**dadurch gekennzeichnet, dass** das Verfahren ebenfalls die Schritte umfasst:

- Berechnen einer Kurve, die $P^i_{trans}$ darstellt, in Abhängigkeit der Frequenzen $f_i$ durch eine Quadraturformel einer Interpolation S an dem Punkt;
- Berechnen der Lebensdauer der Träger an dem Punkt unter Verwendung der folgenden Formel:

$$\tau = \frac{\dfrac{x_0^2}{S} + x_0(d-1) - K}{\dfrac{S}{(P_{sat} - P_{dark})} - (1+D)f_{max}}$$

in der $x_0$ und $K$ Konstanten sind.

2. Verfahren gemäß Anspruch 1, bei dem die Interpolation S durch die folgende Quadraturformel berechnet wird:

$$S = \sum_{i=1}^{i=N} (P_{trans}^i - P_{dark})(f_i - f_{i-1})$$

3. Verfahren gemäß Anspruch 1, bei dem die Interpolation S durch die folgende Quadraturformel berechnet wird:

$$S = \frac{1}{2}\sum_{i=1}^{i=N} (P_{trans}^i + P_{trans}^{i-1} - 2P_{dark})(f_i - f_{i-1})$$

4. Verfahren gemäß Anspruch 1, bei dem die Interpolation S durch die folgende Quadraturformel berechnet wird:

$$S = (P_{trans}^N - P_{dark})\left(\frac{f_N - f_{N-1}}{2}\right) + \sum_{i=1}^{i=N-1} (P_{trans}^i - P_{dark})\left(\frac{f_i - f_{i-1}}{2}\right)$$

5. Verfahren gemäß einem der voranstehenden Ansprüche, bei dem der Parameter $x_0$ einen Wert derart aufweist, dass g(x) = 0,95, wobei $g(x) = x e^{\frac{(D-1)}{x}}$

6. Verfahren gemäß einem der voranstehenden Ansprüche, bei dem die Kontante K durch die folgende Formel angegeben wird:

$$K = \sum_{0}^{n} (-1)^n \frac{1}{(n+2)!} x_0^{n+2} \times e^{\frac{(D-1)}{x_0}} \sum_{b_1 + 2b_2 + \cdots + nb_n = n} \frac{n!}{b_1! \, b_2! \dots b_n!} \prod_{j=1}^{n} \left(\frac{(1+D)^j}{x_0^{j+1}}\right)^{b_j}$$

7. Verfahren gemäß einem der Ansprüche 1 bis 6, bei dem die Mikroskopietechnik mit Atomkraft eine Mikroskopietechnik mit Kelvin-Kraft ist, wobei der gemessene Parameter P eine Kontaktpotenzial-Differenz ist.

8. Verfahren gemäß einem der Ansprüche 1 bis 6, bei dem die Mikroskopietechnik mit Atomkraft eine Mikroskopietechnik mit elektrostatischer Kraft ist, wobei der gemessene Parameter P eine Frequenz ist.

9. Verfahren gemäß einem der Ansprüche 1 bis 6, bei dem die Mikroskopietechnik mit Atomkraft eine Mikroskopietechnik mit leitender Atomkraft ist, wobei der gemessene Parameter P ein Strom ist.

10. Verfahren gemäß einem der voranstehenden Ansprüche, bei dem das zyklische Verhältnis D gleich ½ ist.

11. Verfahren gemäß einem der voranstehenden Ansprüche, bei dem jedes modulierte Lichtbündel ein Laser-Strahlenbündel ist.

12. Kartographieverfahren der Lebensdauer der Träger einer Fläche (2) einer Probe (3), bei dem das Bestimmungsverfahren der Lebensdauer der Träger gemäß einem der voranstehenden Ansprüche in mehreren Punkten der Probe (3) derart wiederholt wird, dass eine Kartographie der Lebensdauer der Träger durchgeführt wird.

**Claims**

1. Method for determining a carrier lifetime in at least one point of a surface (2) of a sample (3), with the method comprising the following steps:

   - in the absence of illumination, measuring, at the point, a parameter P representing the charge carriers in the sample (3) via an atomic force microscopy technique in such a way as to obtain a value $P_{dark}$;
   - illuminating the point with a continuous light beam;
   - measuring, at the point, the parameter P representing the charge carriers in the sample (3) via the atomic force microscopy technique in such a way as to obtain a value $P_{sat}$;
   - successively illuminating the point with continuous modulated light beams each having a different frequency $f_i$, the frequency $f_i$ varying from one modulated light beam to the next, with the frequencies $f_i$ being between a minimum frequency $f_{min}$ and a maximum frequency $f_{max}$, with the modulated light beams having a duty cycle D being defined the ratio between the duration of illumination and the sum of the duration of illumination and of extinction during a cycle;
   - for each modulated light beam, measuring, at the point, the parameter P representing the charge carriers in the sample (3) via the atomic force microscopy technique in such a way as to obtain a value $P^i_{trans}$ for each frequency $f_i$;
   - calculating using a quadrature formula an interpolation S, at the point, of a curve representing $P^i_{trans}$ according to the frequencies $f_i$;
   - calculating the carrier lifetime, at the point, by using the following formula:

$$\tau = \frac{\frac{x_0^2}{2} + x_0(D-1) - K}{\frac{S}{(P_{sat} - P_{dark})} - (1+D)f_{max}}$$

   Wherein $X_0$ and $K$ are constants.

2. Method according to claim 1, wherein the interpolation S is calculated by the following quadrature formula:

$$S = \sum_{i=1}^{i=N} (P^i_{trans} - P_{dark})(f_i - f_{i-1})$$

3. Method according to claim 1, wherein the interpolation S is calculated by the following quadrature formula:

$$S = \frac{1}{2}\sum_{i=1}^{i=N} (P^i_{trans} + P^{i-1}_{trans} - 2P_{dark})(f_i - f_{i-1})$$

4. Method according to claim 1, wherein the interpolation S is calculated by the following quadrature formula:

$$S = (P^N_{trans} - P_{dark})\left(\frac{f_N - f_{N-1}}{2}\right) + \sum_{i=1}^{i=N-1} (P^i_{trans} - P_{dark})\left(\frac{f_{i+1} - f_{i-1}}{2}\right)$$

5. Method according to one of the preceding claims, wherein the parameter $x_0$ has a value such that $g'(x_0) = 0.95$ with

$$g(x) = xe^{\frac{(D-1)}{x}}.$$

6. Method according to one of the preceding claims, wherein the constant K is given by the following formula:

$$K = \sum_{0}^{n} (-1)^n \frac{1}{(n+2)!} x_0^{n+2}$$

$$\times e^{\frac{(D-1)}{x_0}} \sum_{b_1+2b_2+\cdots+nb_n=n} \frac{n!}{b_1!\, b_2!\, ...\, b_n!} \prod_{j=1}^{n} \left( \frac{(1+D)^j}{x_0^{j+1}} \right)^{b_j}$$

7. Method according to one of claims 1 to 6, wherein the atomic force microscopy technique is a Kelvin force microscopy technique, with the parameter P measured being a contact potential difference.

8. Method according to one of claims 1 to 6, wherein the atomic force microscopy technique is an electrostatic force microscopy technique, with the parameter P measured being a frequency.

9. Method according to one of claims 1 to 6, wherein the atomic force microscopy technique is a conductive atomic force microscopy technique, with the parameter P measured being a current.

10. Method according to one of the preceding claims, wherein the duty cycle D is equal to 1/2.

11. Method according to one of the preceding claims, wherein each modulated light beam is a laser beam.

12. Method for mapping of the carrier lifetime of a surface (2) of a sample (3), wherein the method for determining the carrier lifetime according to one of the preceding claims is repeated at several points of the sample (3) in such a way as to carry out a map of the carrier lifetime.

**Fig. 1**

**Fig. 2**

**Fig. 3a**

**Fig. 3b**

**Fig. 3c**

**Fig. 4**

**Fig. 5**

**Fig. 6**

**Fig. 7**

**Fig. 8a**          **Fig. 8b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **COFFEY D ; GINGER D.** Time-resolved electrostatic force microscopy of polymer solar cells. *Nature materials,* 2006, vol. 5, 735
- **BOROWIK et al.** *Nanotechnology,* 2014, vol. 25, 265703
- **TAKIHARA.** *Appl. Phys. Lett.,* 2008, vol. 93, 021902
- **GLATZEL T ; LUX-STEINER M C ; STRASSBURG E ; BOAG A ; ROSENWAKS Y.** Principles of Kelvin Probe Force Microscopy. Springer, 2007, 113-31
- **T. MÉLIN ; H. DIESINGER ; D.DEREMIES ; D. STIÉVENARD.** Electric force microscopy of individually charged nanoparticles on conductors: An analytical model for quantitative charge imaging. *Physical Review B,* 2004, vol. 69, 3
- **C. TEICHERT ; I. BEINIK.** Scanning Probe Microscopy in Nanoscience and Nanotechnology. Springer, 2011, vol. 2
- *RSC Adv.,* 2014, vol. 4, 15236